# EUROPÄISCHE PATENTSCHRIFT

(11) **EP 3 908 744 B1**
(45) Veröffentlichungstag und Bekanntmachung des Hinweises auf die Patenterteilung: **22.03.2023**
(21) Anmeldenummer: 19831674.7
(22) Anmeldetag: 18.12.2019
(51) Int. Cl.: F03D 1/06

(54) **ROTORBLATTSCHALE, ROTORBLATT UND WINDENERGIEANLAGE**
ROTOR BLADE SHELL, ROTOR BLADE AND WIND TURBINE
COQUE DE PALE DE ROTOR, PALE DE ROTOR ET ÉOLIENNE

(30) Priorität: 08.01.2019 DE 102019000054
(43) Veröffentlichungstag der Anmeldung: 17.11.2021
(73) Patentinhaber: Siemens Gamesa Renewable Energy Service GmbH, 20097 Hamburg (DE)
(72) Erfinder: BENDEL, Urs, 24787 Fockbek (DE)
(74) Vertreter: Schlotter, Alexander Carolus Paul
(86) Internationale Anmeldenummer: PCT/EP2019/085907
(87) Internationale Veröffentlichungsnummer: WO 2020/144020

(56) Entgegenhaltungen:
- DE-A1-102016 000 292
- US-A1- 2010 296 941
- US-A1- 2011 052 407
- US-A1- 2015 151 390

## Beschreibung

Die Erfindung betrifft eine Rotorblattschale für ein Rotorblatt einer Windenergieanlage, ein Rotorblatt für eine Windenergieanlage mit wenigstens einer solchen Rotorblattschale und eine Windenergieanlage mit einem solchen Rotorblatt.

Rotorblätter für Windenergieanlagen werden häufig aus zwei separat voneinander hergestellten Rotorblattschalen zusammengesetzt. Die beiden Rotorblattschalen werden dabei an jeweils im Bereich der sog. Vorderkante oder Nase und der sog. Hinterkante vorgesehenen Klebeflächen miteinander verklebt. Ferner können im Inneren des Rotorblattes bzw. der Rotorblattschalen ein oder mehrere Gurte vorgesehen sein, welche im Wesentlichen entlang einer Längsachse des Rotorblatts von der Rotorblattwurzel zur Rotorblattspitze verlaufen und zusätzliche Stabilität verleihen bzw. elastische Eigenschaften des Rotorblatts beeinflussen. Insbesondere können solche Gurte eine ausreichende Steifigkeit des Rotorblattes in Schlag- und Schwenkrichtung sicherstellen.

US2010/296941A1 offenbart ein Rotorblatt einer Windkraftanlage und wird als relevantes Beispiel für den Stand der Technik angesehen.

Es ist eine Aufgabe der Erfindung, verbesserte Rotorblattschalen und entsprechende Rotorblätter sowie eine entsprechende Windenergieanlage anzugeben. Es ist insbesondere eine Aufgabe der Erfindung, die Flexibilität bei der Formgebung von Rotorblattschalen bzw. Rotorblättern zu erhöhen.

Diese Aufgabe wird durch eine Rotorblattschale, ein Rotorblatt mit einer solchen Rotorblattschale sowie eine Windenergieanlage mit einem solchen Rotorblatt gemäß den unabhängigen Ansprüchen gelöst.

Gemäß einem ersten Aspekt der Erfindung erstreckt sich die Rotorblattschale für ein Rotorblatt einer Windenergieanlage von einer Schalenwurzel in einer Längsrichtung zu einer Schalenspitze und von einer Schalenhinterkante in einer Querrichtung, die auch als Profiltiefe oder Profilrichtung bezeichnet werden kann, zu einer Schalenvorderkante. Ein sich in Längsrichtung erstreckendes Schichtsystem der Rotorblattschale enthält wenigstens eine Kernschicht und zwei Laminate, welche auf einander gegenüberliegenden Seiten der Kernschicht angeordnet sind. Dabei wird ein Teil der Kernschicht in einem ersten Abschnitt der Rotorblattschale durch einen in Längsrichtung verlaufenden Rotorblattgurt gebildet, der an einem der Schalenspitze zugewandten Ende des ersten Abschnitts endet. Zudem weist wenigstens eines der beiden Laminate in einem zweiten Abschnitt der Rotorblattschale, der sich am der Schalenspitze zugewandten Ende des ersten Abschnitts an den ersten Abschnitt anschließt und im Wesentlichen bis zur Schalenspitze verläuft, wenigstens eine Faserlage auf. Diese Faserlage erstreckt sich in Querrichtung von der Schalenhinterkante bis zur Schalenvorderkante und enthält Fasern, von denen sich ein überwiegender Teil, vorzugsweise mehr als 60 %, insbesondere mehr als 80 %, in Längsrichtung erstreckt.

Gemäß einem zweiten Aspekt der Erfindung weist ein Rotorblatt für eine Windenergieanlage wenigstens eine Rotorblattschale nach dem ersten Aspekt der Erfindung auf.

Gemäß einem dritten Aspekt der Erfindung weist eine Windenergieanlage mindestens ein Rotorblatt nach dem zweiten Aspekt der Erfindung auf.

Bevorzugte Aspekte der Erfindung basieren auf dem Ansatz, eine Rotorblattschale mit einem Rotorblattgurt vorzusehen, der sich nicht über im Wesentlichen die gesamte Länge einer Rotorblattschale, d.h. in einer Längsrichtung von einem Bereich an einer Schalenwurzel bis zu einem Bereich an einer Schalenspitze, erstreckt, sondern lediglich in einem in Bezug auf die Gesamtlänge kürzeren ersten Abschnitt. Um die Stabilität, insbesondere die Biegesteifigkeit, der Rotorblattschale oder eines korrespondierenden Rotorblatts, welches die Rotorblattschale aufweist, über dessen gesamte Länge zu gewährleisten, wird in einem zweiten Abschnitt, der sich an ein der Schalenspitze zugewandtes Ende des ersten Abschnitts anschließt, wenigstens eine Faserlage angeordnet, die sich in einer Querrichtung von einer Hinterkante der Rotorblattschale bis zu einer Vorderkante der Rotorblattschale erstreckt und deren Fasern zum überwiegenden Teil entlang der Längsrichtung der Rotorblattschale ausgerichtet sind. Durch diese Ausrichtung der Fasern kann die notwendige Steifigkeit in Schlag- und Schwenkrichtung im Bereich der Spitze der Rotorblattschale bzw. des korrespondierenden Rotorblatts erreicht werden. Mit anderen Worten kann die wenigstens eine Faserlage im zweiten Abschnitt als Gurtersatz wirken.

Dies ist z.B. vorteilhaft, da die Form der Rotorblattschale bzw. des die Rotorblattschale enthaltenden Rotorblattes im Bereich der Spitze somit frei wählbar ist. So ist etwa denkbar, dass die sog. Auffädelachse des Rotorblattes im Bereich der Spitze in Richtung Hinterkante gebogen ausgeführt wird bzw. das Rotorblatt im Bereich der Spitze eine sog. Pfeilung aufweist, wobei die Vorder- und Hinterkante in Längsrichtung derart gekrümmt sind, dass ein Rotorblattkamm, welcher durch den Verlauf der maximalen Bauhöhe des Querschnittsprofils der Rotorblattschale bzw. des Rotorblattes in Längsrichtung definiert ist, zur Blattspitze hin einen kontinuierlich zunehmenden Abstand von der sog. Pitchachse, um welche das Rotorblatt im Betrieb zur Einstellung eines Anstellwinkels gedreht werden kann, aufweist. Dies kann z.B. zur Reduktion der einwirkenden Belastungen vorteilhaft sein. Mit einem gradlinigen Verlauf des Rotorblattgurtes bis in die Nähe der Blattspitze wäre eine derartige Ausgestaltung des Rotorblattes nicht möglich. Darüber hinaus kann durch den Verzicht des Rotorblattgurts im zweiten Abschnitt gegebenenfalls auch Gewicht eingespart werden.

Der im Vergleich zur Gesamtlänge der Rotorblattschale, z.B. um 10 % oder mehr, vorzugsweise um 20 % oder mehr, insbesondere um 40 % oder mehr, verkürzte Rotorblattgurt im ersten Abschnitt und die wenigstens eine Faserlage im zweiten Abschnitt können dabei Teil eines Schichtsystems sein, das sich in Längsrichtung erstreckt. Der Rotorblattgurt ist dabei vorzugsweise in einer Kernschicht enthalten, die auf einander gegenüberliegenden Seiten, insbesondere in einer zur Längs- und Querrichtung senkrechten Dickenrichtung, in welcher auch die Bauhöhe der Rotorblattschale bzw. des korrespondierenden Rotorblatts definiert ist, von zwei Laminaten eingefasst wird. Im zweiten Bereich enthält wenigstens eines der beiden Laminate die wenigstens eine Faserlage, die überwiegend Fasern in Längsrichtung des Rotorblattes aufweist. Daneben enthalten die Laminate vorzugsweise auch eine oder mehrere Faserverbundmaterialen bzw. Faserverbundschichten, z.B. Glasfasergelege und/oder - gewebe, welche das Schichtsystem stabilisieren. Diese Anordnung ist z.B. vorteilhaft, da somit der konventionelle Aufbau von Rotorblattschalen mit einem Rotorblattgurt in Form einer Baugruppe im Wesentlichen unverändert übernommen werden kann.

Die wenigstens eine Faserlage kann beispielsweise als sog. Multiaxialgelege ausgebildet sein, das neben den in Längsrichtung verlaufenden Fasern auch Fasern aufweist, die in weiteren Richtungen ausgerichtet sind, z.B. 45° oder 60° bezüglich der Längsrichtung. Dadurch kann die Steifigkeit der Rotorblattschale bzw. des korrespondierenden Rotorblattes bezüglich weiterer Richtungen zumindest beeinflusst, insbesondere erhöht, werden. Dabei kann eine gegenüber dem Rotorblattgurt gegebenenfalls verminderte Dicke bzw. Stärke der wenigstens einen Faserlage durch die Erstreckung von der Schalenhinterkante bis zur Schalenvorderkante ausgeglichen werden.

Insgesamt wird durch die Erfindung eine verbesserte Rotorblattschale und ein entsprechendes Rotorblatt sowie eine Windenergieanlage mit einem solchen Rotorblatt angegeben.

In einer bevorzugten Ausführungsform sind im Wesentlichen alle Fasern der wenigstens einen Faserlage in Längsrichtung ausgerichtet. Alternativ oder zusätzlich ist die wenigstens eine Faserlage als unidirektionale Schicht ausgebildet. Solche Faserlagen, die sich in Querrichtung von der Schalenhinterkante bis zur Schalenvorderkante erstrecken, werden auch als Full-Chord-UD-Lagen bezeichnet. Die zumindest im Wesentlichen in Längsrichtung ausgerichteten Fasern wirken in bevorzugter Weise als Fortsatz des ebenfalls im Wesentlichen in Längsrichtung ausgerichteten Rotorblattgurts im ersten Abschnitt. Ein Sprung in der Steifigkeit der Rotorblattschale in Längsrichtung kann so effektiv vermieden oder zumindest vermindert werden.

In einer weiteren bevorzugten Ausführungsform weist der erste Abschnitt am der Schalenspitze zugewandten Ende einen Übergangsbereich auf, in dem sich der Rotorblattgurt verjüngt. Der Rotorblattgurt kann im Übergangsbereich insbesondere eine auch als Schäftung bezeichnete Abschrägung aufweisen. Dabei ist es bevorzugt, dass sich die wenigstens eine Faserlage aus dem zweiten Abschnitt zumindest teilweise bis in den Übergangsbereich erstreckt, d.h. zumindest teilweise in den ersten Abschnitt hineinragt. Insbesondere ist es denkbar, dass die Anzahl an Faserlagen mit Fasern, von denen sich ein überwiegender Teil in Längsrichtung erstreckt, vom Übergangsbereich bis zum zweiten Abschnitt hinzunimmt, um die abnehmende Steifigkeit des sich verjüngenden Rotorblattgurts zumindest teilweise zu kompensieren. In bevorzugter Weise nimmt im dem Maße, in dem sich der Rotorblattgurt verjüngt, der Anteil von sich in Längsrichtung erstreckenden Fasern in wenigstens einem der beiden Laminate, insbesondere in der wenigstens einen Faserlage, zu. Dadurch kann sichergestellt werden, dass bezüglich der Steifigkeit ein im Wesentlichen kontinuierlicher Übergang vom ersten Abschnitt zum zweiten Abschnitt geschaffen wird.

In einer weiteren bevorzugten Ausführungsform weist die Kernschicht ein Kernmaterial auf, welches den Rotorblattgurt im ersten Abschnitt umgibt. Dabei enthält die Kernschicht das Kernmaterial, z.B. Schaumstoff oder Balsa, vorzugsweise über die gesamte Länge der Rotorblattschale, also neben dem ersten Abschnitt auch im zweiten Abschnitt, wobei das Kernmaterial im ersten Abschnitt in bevorzugter Weise durch den Rotorblattgurt geteilt wird. Das Kernmaterial kann beispielsweise in Querrichtung beidseitig vom Rotorblattgurt angeordnet sein. Das Kernmaterial dient, im ersten Abschnitt vorzugsweise zusammen mit dem Rotorblattgurt, als Träger für die Laminate, welche die mechanischen Eigenschaften der Rotorblattschale bzw. des korrespondierenden Rotorblatts beeinflussen. Im zweiten Abschnitt kann das Kernmaterial, da es nicht mehr um den Rotorblattgurt herum angeordnet werden muss, die Form der Rotorblattschale flexibel vorgeben.

In einer weiteren bevorzugten Ausführungsform weist das Schichtsystem wenigstens eine Deckschicht auf, die auf einer der Kernschicht abgewandten Seite wenigstens eines der Laminate angeordnet ist und eine Außenseite oder eine Innenseite der Rotorblattschale bildet. Die Deckschicht kann beispielsweise als Beschichtung ausgebildet sein, etwa als Lack, welche das Schichtsystem vor Umwelteinflüssen wie Feuchtigkeit schützt.

In einer weiteren bevorzugten Ausführungsform weisen die Schalenvorderkante und die Schalenhinterkante entlang der Längsrichtung eine Krümmung auf, so dass sich ein in Richtung der Hinterkante gekrümmter Rotorblattkamm, welcher durch den Verlauf der maximalen Bauhöhe des Querschnittsprofils der Rotorblattschale entlang der Längsrichtung definiert wird, ergibt. Insbesondere sind die Schalenvorder- und Hinterkante dabei in der Weise gekrümmt, dass der Rotorblattkamm, insbesondere im zweiten Abschnitt, nicht mehr entlang einer Pitchachse, um welche die Rotorblattschale bzw. das korrespondierende Rotorblatt zum Einstellen eines Anstellwinkels gedreht werden kann, verläuft. Zum Beispiel kann ein Abstand zwischen der Pitchachse und dem Rotorblattkamm, insbesondere im zweiten Abschnitt, zur Schalenspitze hin im Wesentlichen kontinuierlich zunehmen.

Eine solche Krümmung der Rotorblattschale bzw. des korrespondierenden Rotorblatts wird auch als Pfeilung bezeichnet. Durch die derart gekrümmte Rotorblattschale können im korrespondierenden Rotorblatt die auf das Rotorblatt und die gesamte Windenergieanlage wirkenden Lasten reduziert werden. Insbesondere kann der sog. Bend-Twist-Kopplungseffekt in der Rotorblattstruktur ausgenutzt werden.

Das Enden des Rotorblattgurts am der Schalenspitze zugewandten Ende des ersten Abschnitts und die wenigstens eine Faserlage im zweiten Bereich ermöglicht es hierbei, besonders starke Krümmungen der Rotorblattschale zu erzielen, da die Form der Rotorblattschale im zweiten Bereich nicht durch den geradlinig verlaufenden Rotorblattgurt beschränkt ist. Es können so insbesondere Krümmungen erzielt werden, bei denen ein konventioneller, im Wesentlichen die Länge der Rotorblattschale aufweisender Rotorblattgurt die Schalenvorderkante durchstoßen würde.

Durch die oben beschriebene Pfeilung des Rotorblattes ist es möglich, den notwendigen Materialeinsatz im gesamten Rotorblatt, um die notwendige Festigkeit und Steifigkeit zu erreichen, deutlich zu reduzieren. Zudem ist es möglich, auf diese Weise den Herstellungsaufwand zu verringern.

In einer weiteren bevorzugten Ausführungsform ist die Lage des der Schalenspitze zugewandten Endes des ersten Abschnitts durch einen vorgegebenen Abstand zwischen dem Rotorblattgurt und der Vorderkante, die sich insbesondere durch die in Richtung Blattspitze stetig abnehmende Profiltiefe des Rotorblattes immer weiter der Hinterkante des Rotorblattes annähert, festgelegt. Dabei kann sich der Abstand zwischen dem Rotorblattgurt und der Vorderkante in Längsrichtung von der Schalenwurzel bis zum der Schalenspitze zugewandten Ende des ersten Abschnitts, insbesondere kontinuierlich, verringern. Der erste Abschnitt endet auf einer der Schalenspitze zugewandten Seite dann vorzugsweise dort, wo der Abstand dem vorgegebenen Abstand zumindest im Wesentlichen entspricht. Der Aufbau der Rotorblattschale kann dadurch flexibel an den Verlauf der Vorderkante angepasst werden. Zumindest kann dadurch die Steifigkeit des Rotorblattgurts bei einer sich zur Schalenspitze hin verjüngenden Rotorblattschale maximal ausgenutzt werden.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Rotorblatts im Querschnitt entlang einer Querrichtung durch einen ersten Abschnitt;
- Fig. 2: ein Beispiel des Rotorblatts aus Fig. 1 im Querschnitt entlang der Querrichtung durch einen zweiten Abschnitt;
- Fig. 3: ein Beispiel eines Teils einer Rotorblattschale im Querschnitt durch einen Übergangsbereich;
- Fig. 4: ein Beispiel für eine gepfeilte Rotorblattschale; und
- Fig. 5: ein Beispiel für eine gepfeilte Rotorblattschale mit einem Rotorblattgurt, der sich in einem ersten Abschnitt von einer Schalenwurzel aus nur über einen Teil der Gesamtlänge der Rotorblattschale entlang einer Längsrichtung der Rotorblattschale erstreckt.

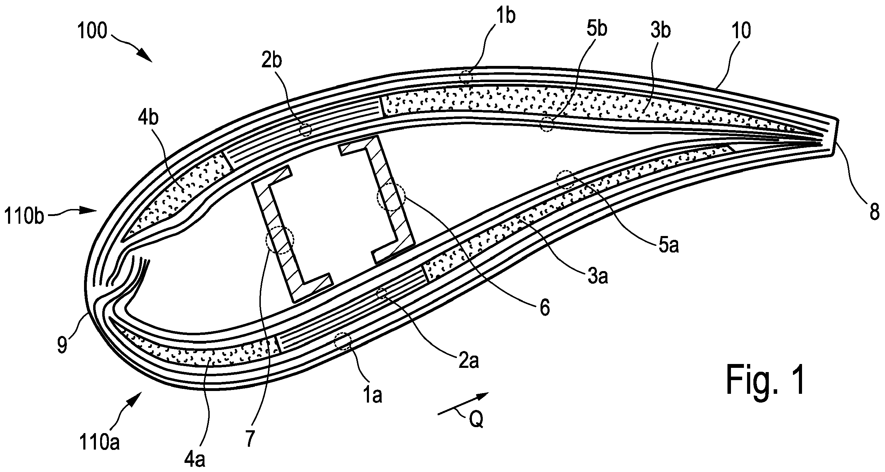

Figur 1 zeigt ein Beispiel eines Rotorblatts 100 in einem Querschnitt in einer Querrichtung Q durch einen ersten Abschnitt, der sich entlang einer Längsrichtung senkrecht zur Zeichenebene erstreckt. Das Rotorblatt 100 weist zwei Rotorblattschalen 110a, 110b auf, die in Querrichtung Q gekrümmt und an ihren Schalenvorderkanten 9, an ihren Schalenhinterkanten 8 sowie über einen Steg mit einem Vorderkantenstegelement 7 und einem Hinterkantenstegelement 6 miteinander verbunden sind. Jede der Rotorblattschalen 110a, 110b weist ein Schichtsystem aus einer Kernschicht, einem Außenlaminat 1a, 1b und einem Innenlaminat 5a, 5b auf, wobei die Außenlaminate 1a, 1b und die Innenlaminate 5a, 5b jeweils auf zwei einander gegenüberliegenden Seiten der Kernschicht angeordnet sind. Auf den Außenlaminaten 1a, 1b ist zudem eine Deckschicht 10 angeordnet, welche die mit der Außenseite des Rotorblatts 100 korrespondierenden Oberflächen der Rotorblattschalen 110a, 110b bildet.

Die Kernschichten werden im ersten Abschnitt von Rotorblattgurten 2a, 2b und einem Kernmaterial 4a, 4b, 3a, 3b gebildet, wobei ein Teil des Kernmaterials 4a, 4b zwischen den Rotorblattgurten 2a, 2b und den Schalenvorderkanten 9 und ein weiterer Teil des Kernmaterials 3a, 3b zwischen den Rotorblattgurten 2a, 2b und den Schalenhinterkanten 8 angeordnet ist. Mit anderen Worten sind die Rotorblattgurte 2a, 2b im ersten Abschnitt vom Kernmaterial 4a, 4b, 3a, 3b, zumindest in Querrichtung Q, umgeben. Die Kernschichten dienen dabei über den gesamten Querschnitt als Träger für die Laminate 1a, 1b, 5a, 5b und geben die Form der Rotorblattschalen 110a, 110b bzw. des Rotorblatts 100, insbesondere deren Krümmung, vor.

Als Kernmaterial 4a, 4b, 3a, 3b kann beispielsweise ein Schaumstoff oder Balsaholz eingesetzt werden, wodurch Formstabilität bei gleichzeitig geringem Gewicht erzielt wird. Die Laminate 1a, 1b, 5a, 5b werden dagegen vorzugsweise von faserhaltigen, insbesondere glasfaserhaltigen, Gewebe- oder Gelegelagen gebildet, die zur Versteifung und zur Verbindung mit der Kernschicht mit Harz getränkt sind. Die Deckschicht 10 kann einen Lack enthalten, mit dem die Laminate 1a, 1b, 5a, 5b beschichtet sind.

Die elastischen Eigenschaften der Rotorblattschalen 110a, 110b bzw. des Rotorblatts 100 werden zumindest im ersten Abschnitt wesentlich von den Rotorblattgurten 2a, 2b beeinflusst, welche beispielsweise aus einem, insbesondere in einer Längsrichtung senkrecht zur Zeichenebene, besonders biegesteifen Material gefertigt sind. Bei den Rotorblattgurten 2a, 2b handelt es sich vorzugsweise um stranggezogene Faserverbünde, etwa sog. Kohlenstoffpultrudate.

Zusätzlich kann zumindest eine der Rotorblattschalen 110a, 110b auch einen zusätzlichen Gurt im Bereich der Schalenhinterkante 8 aufweisen. Alternativ oder zusätzlich sind auch Rotorblattschalen 110a, 110b denkbar, bei denen die Gurte 2a und 2b in jeweils zwei Gurtteile aufgeteilt sind.

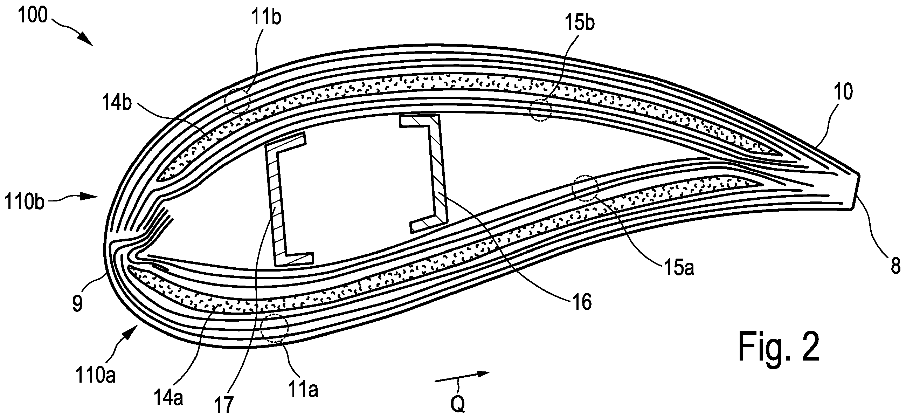

Figur 2 zeigt das Rotorblatt 100 aus Figur 1 mit den beiden durch ein Vorderkantenstegelement 17 und ein Hinterkantenstegelement 16 verbundenen Rotorblattschalen 110a, 110b in einem Querschnitt in Querrichtung Q durch einen zweiten Abschnitt, der sich entlang einer Längsrichtung senkrecht zur Zeichenebene erstreckt und sich an den ersten Abschnitt anschließt. Im Unterschied zum ersten Abschnitt enthalten die Kernschichten im zweiten Abschnitt keine Rotorblattgurte mehr, sondern werden ausschließlich vom Kernmaterial 14a, 14b gebildet, welches sich durchgängig im Wesentlichen von den Schalenvorderkanten 9 bis zu den Schalenhinterkanten 8 in Querrichtung Q erstreckt. Zudem werden die Außen- und Innenlaminate durch äußere Faserlagen 11a, 11b bzw. innere Faserlagen 15a, 15b gebildet, welche sich im Wesentlichen durchgängig von den Schalenvorderkanten 9 bis zu den Schalenhinterkanten 8 in Querrichtung Q erstrecken und Fasern enthalten, von denen sich ein überwiegender Teil, vorzugsweise mehr als 60 %, insbesondere mehr als 80 %, in Längsrichtung, d.h. senkrecht zur Figurenebene, erstreckt.

Als Faserlagen 11a, 11b, 15a, 15b, welche die im ersten Abschnitt durch die Rotorblattgurte erreichte Biegesteifigkeit in Längsrichtung auch im zweiten Abschnitt zumindest annährend sicherstellen, werden vorzugsweise sog. Full-Chord-UD-Lagen eingesetzt, in denen im Wesentlichen alle Fasern unidirektional, insbesondere entlang der Längsrichtung, ausgerichtet sind. Alternativ ist es aber auch denkbar, sog. Multiaxialgelege zu verwenden, in denen nur ein Teil der Fasern in Längsrichtung liegt, und ein anderer Teil der Fasern in einer oder mehreren anderen Richtungen ausgerichtet ist. Dadurch kann die Biegesteifigkeit auch in diesen anderen Richtungen beeinflusst, insbesondere erhöht, werden.

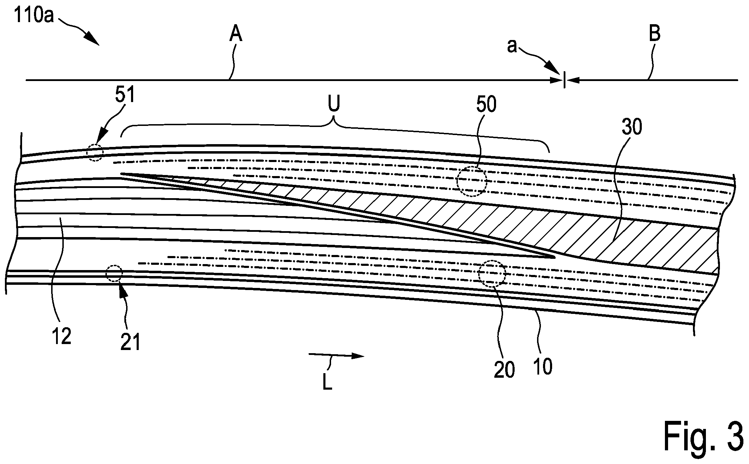

Figur 3 zeigt ein Beispiel eines Teils einer Rotorblattschale 110a im Querschnitt entlang einer Längsrichtung L durch einen Übergangsbereich U, in dem sich ein Rotorblattgurt 12 zu einem einer Schalenspitze (nicht gezeigt) der Rotorblattschale 110a zugewandten Ende a eines ersten Abschnitts A hin verjüngt. An den Rotorblattgurt 12 schließt sich ein Kernmaterial 30 an, welches insbesondere an der durch die Verjüngung gebildeten Endfläche des Rotorblattgurts 12 anliegt und mit dem Rotorblattgurt 12 eine Kernschicht eines Schichtsystems bildet. Das Schichtsystem erstreckt sich dabei in Längsrichtung L von einer Schalenwurzel (nicht gezeigt) der Rotorblattschale 110a im ersten Abschnitt A zur Schalenspitze in einem zweiten Abschnitt B, der sich an das der Schalenspitze zugewandte Ende a des ersten Abschnitts A anschließt, und weist zwei Laminate 21, 51 auf, welche den Rotorblattgurt 12 bzw. das Kernmaterial 30 beidseitig umgeben, insbesondere einfassen.

Dabei wird das Laminat, welches auf einer konvex gekrümmten Seite der Rotorblattschale 110a angeordnet ist (siehe Figuren 1 und 2), auch als Außenlaminat 21 bezeichnet und das auf der konkav gekrümmten Seite der Rotorblattschale 110a auch als Innenlaminat 51. Zumindest ein Teil des Außen- und des Innenlaminats 21, 51 sowohl im ersten als auch im zweiten Abschnitt A, B wird in bevorzugter Weise von einem Faserverbundmaterial gebildet, das als durchgezogene Linie eingezeichnet ist und Fasern enthält, von denen zumindest ein überwiegender Teil unter einem Winkel, z.B. 45° oder 60°, zur Längsrichtung L verläuft. Vorzugsweise ist dieses sich über die gesamte Länge der Rotorblattschale L erstreckende Faserverbundmaterial als Multiaxialgelege oder - gewebe ausgebildet, in dem die Fasern in mehreren Richtungen verlaufen. Auf dem Faserverbundmaterial des Außenlaminats 21 ist zudem eine Deckschicht 10 aufgebracht, welche die darunter liegenden Laminate 21, 51 und/oder die Kernschicht, insbesondere den Rotorblattgurt 12 und/oder das Kernmaterial 30, gegen äußere Einflüsse, z.B. Feuchtigkeit, schützt.

Sowohl das Außenlaminat 21 als das Innenlaminat 51 weisen im zweiten Abschnitt B jeweils mehrere Faserlagen 20, 50 auf, die Fasern enthalten, von denen sich ein überwiegender Teil, vorzugsweise mehr als 60 %, insbesondere mehr als 80 %, in Längsrichtung L erstreckt. Diese Faserlagen 20, 50 sind als strichpunktierte Linien eingezeichnet und vorzugsweise als sog. Full-Chord-UD-Lagen ausgebildet, in denen sich alle Fasern unidirektional, insbesondere in Längsrichtung L, erstrecken. Die Full-Chord-UD-Lagen reichen aus dem zweiten Abschnitt B in den Übergangsbereich U, insbesondere bis zum Beginn der Verjüngung des Rotorblattgurts 12, hinein. Dabei nimmt die Anzahl dieser Lagen im Übergangsbereich U in dem Maße zu, in dem die Stärke des Rotorblattgurts 12 abnimmt. Diese Staffelung wird z.B. dadurch erreicht, dass die Full-Chord-UD-Lagen nahe des Außen- bzw. Innenlaminats 21, 51 länger sind als die Full-Chord-UD-Lagen nahe des Kernmaterials 30.

Durch die Ausrichtung der Fasern der Full-Chord-UD-Lagen entlang der Längsrichtung L wird die Biegesteifigkeit der Rotorblattschale 110a in Längsrichtung L im zweiten Abschnitt B gegenüber konventionellen Rotorblattschalen, die lediglich ein Außen- und Innenlaminat 21, 51 mit Faserverbundmaterialien aufweisen, deren Fasern unter einem Winkel zur Längsrichtung L verlaufen, erhöht. Die Faserlagen 20, 50 wirken somit als Fortsatz des Rotorblattgurts 12 im zweiten Abschnitt B, ohne dass die Form der Rotorblattschale 110a durch den geradlinigen Verlauf des Rotorblattgurts 12 beschränkt ist.

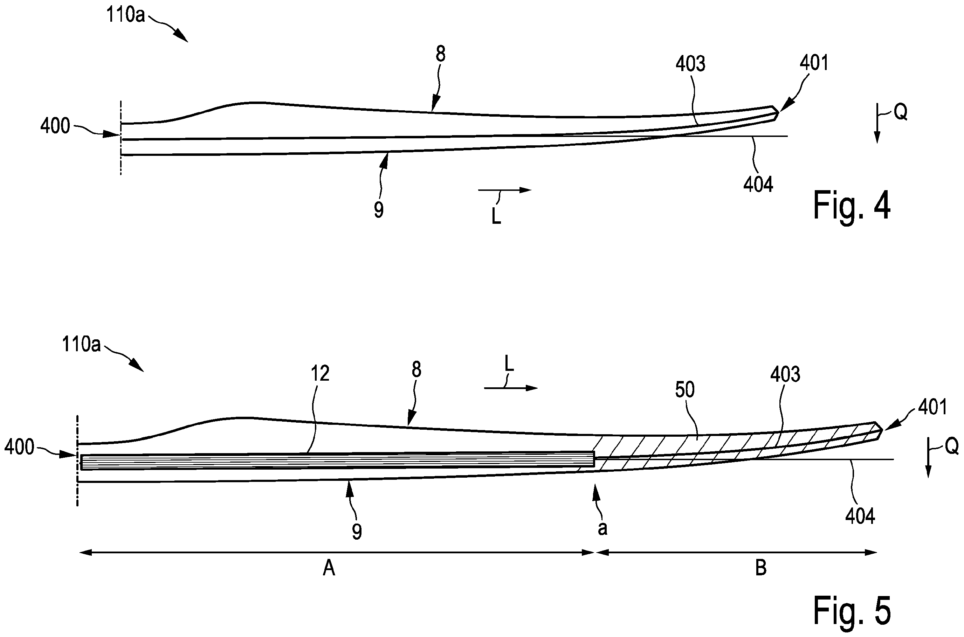

Figur 4 zeigt ein Beispiel für eine gepfeilte Rotorblattschale 110a in einer Draufsicht, wobei sich die Rotorblattschale 110a von einer Schalenwurzel 400 zu einer Schalenspitze 401 in einer Längsrichtung L und von einer Schalenhinterkante 8 zu einer Schalenvorderkante 9 in einer Querrichtung Q erstreckt. Dabei sind die Schalenvorderkante 9 und die Schalenhinterkante 8 entlang der Längsrichtung L gekrümmt, so dass sich ein in Richtung der Hinterkante gekrümmter Verlauf eines Rotorblattkamms 403, welcher die maximale Bauhöhe des Querschnitts der Rotorblattschale 110a entlang der Längsrichtung L definiert, ergibt.

In Figur 4 ist ebenfalls eine Pitchachse 404 gezeigt, um welche die Rotorblattschale 110a bzw. das entsprechende Rotorblatt im Betrieb zum Einstellen eines Anstellwinkels gedreht werden kann. Durch die Krümmung der Schalenhinter- und Schalenvorderkante 8, 9 weicht der Verlauf des Rotorblattkamms 403 vom Verlauf der Pitchachse 404 ab. Insbesondere krümmt sich der Rotorblattkamm 400 im Bereich der Schalenspitze 401 von der Pitchachse 404 in Richtung Hinterkante 8 weg.

Figur 5 zeigt ein Beispiel für eine gepfeilte Rotorblattschale 110a mit einem Rotorblattgurt 12, der sich in einem ersten Abschnitt A von einer Schalenwurzel 400 aus nur über einen Teil der Gesamtlänge der Rotorblattschale 110a entlang einer Längsrichtung L der Rotorblattschale 110a erstreckt. Insbesondere endet der Rotorblattgurt 12 an einem einer Schalenspitze 401 zugewandten Ende a des ersten Abschnitts A, an das sich ein zweiter Abschnitt B anschließt. Dabei liegt das der Schalenspitze 401 zugewandte Ende a des ersten Abschnitts A dort, wo ein Abstand zwischen einer Schalenvorderkante 9 und dem Rotorblattgurt 12 einen vorgegeben Wert annimmt.

Um die durch den Rotorblattgurt 12 erreichte Stabilität der Rotorblattschale 110a auch im zweiten Bereich B zumindest teilweise erhalten, weist die Rotorblattschale 11a sind im zweiten Bereich B wenigstens eine Faserlage 50 auf, die sich in einer Querrichtung Q von einer Schalenhinterkante 8 bis zur Schalenvorderkante 9 erstreckt und Fasern enthält, von denen sich ein überwiegender Teil, vorzugsweise mehr als 60 %, insbesondere mehr als 80 %, in Längsrichtung L erstreckt. Diese Faserlage 50 kann insbesondere als sog. Full-Chord-UD-Lage ausgebildet sein, in der sich alle Fasern unidirektional in Längsrichtung L erstrecken. Zudem ist die Faserlage 50 Teil eines Schichtsystems (nicht gezeigt), welches sich entlang der Längsrichtung von der Schalenwurzel 400 zur Schalenspitze 401, d.h. sowohl im ersten als auch im zweiten Abschnitt A, B, erstreckt.

Wie in Figur 5 zu erkennen ist, ist der Rotorblattgurt 12 im Wesentlichen entlang einer Pitchachse 404, um welche die Rotorblattschale 110a im Betrieb zum Einstellen eines Anstellwinkels gedreht werden kann, angeordnet. Im ersten Bereich A verläuft auch ein Rotorblattkamm 403, welcher die Bauhöhe der Rotorblattschale 110a entlang der Längsrichtung L definiert, entlang der Pitchachse 404, wobei der Rotorblattkamm 403 aufgrund der Pfeilung der Rotorblattschale 110a im zweiten Bereich B zur Hinterkante 8 hin gekrümmt ist. Der Rotorblattgurt 12 endet somit an dem der Schalenspitze 401 zugewandten Ende a des ersten Abschnitts A dort, wo der Rotorblattkamm 403 beginnt, wesentlich vom geradlinigen Verlauf der Pitchachse 404 abzuweichen und der Rotorblattgurt 12 der Schalenvorderkante 9 dadurch so nahe kommt, dass er nicht mehr weiter in Längsrichtung L fortgeführt werden kann.

## Patentansprüche

1. Rotorblattschale (110a, 110b) für ein Rotorblatt (100) einer Windenergieanlage, wobei sich die Rotorblattschale (110a, 110b) von einer Schalenwurzel (400) in einer Längsrichtung (L) zu einer Schalenspitze (401) und von einer Schalenhinterkante (8) in einer Querrichtung (Q) zu einer Schalenvorderkante (9) erstreckt und ein sich in Längsrichtung (L) erstreckendes Schichtsystem aufweist, welches wenigstens eine Kernschicht und zwei Laminate (1a, 2b, 5a, 5b, 21, 51), welche auf einander gegenüberliegenden Seiten der Kernschicht angeordnet sind, enthält, wobei
- ein Teil der Kernschicht in einem ersten Abschnitt (A) der Rotorblattschale (110a, 110b) durch einen in Längsrichtung (L) verlaufenden Rotorblattgurt (2a, 2b, 12) gebildet wird, der an einem der Schalenspitze zugewandten Ende (a) des ersten Abschnitts (A) endet, und
- wenigstens eines der beiden Laminate (1a, 2b, 5a, 5b, 21, 51) in einem zweiten Abschnitt (B) der Rotorblattschale (110a, 110b), der sich am der Schalenspitze zugewandten Ende (a) des ersten Abschnitts (A) an den ersten Abschnitt (A) anschließt und im Wesentlichen bis zur Schalenspitze verläuft, wenigstens eine Faserlage (11a, 11b, 15a, 15b, 20, 50) aufweist, die sich in Querrichtung (Q) von der Schalenhinterkante (8) bis zur Schalenvorderkante (9) erstreckt,
**dadurch gekennzeichnet, dass**
die wenigstens eine Faserlage (11a, 11b, 15a, 15b, 20, 50) Fasern enthält, von denen sich ein überwiegender Teil, vorzugsweise mehr als 60 %, insbesondere mehr als 80 %, in Längsrichtung (L) erstreckt, der erste Abschnitt (A) am der Schalenspitze zugewandten Ende (a) einen Übergangsbereich (U) aufweist, in dem sich der Rotorblattgurt (2a, 2b, 12) verjüngt, und sich Faserlagen (11a, 11b, 15a, 15b, 20, 50) aus dem zweiten Abschnitt (B) zumindest teilweise bis in den Übergangsbereich (U) erstrecken, wobei die Anzahl an Faserlagen (11a, 11b, 15a, 15b, 20, 50) mit Fasern, von denen sich ein überwiegender Teil in Längsrichtung (L) erstreckt, vom Übergangsbereich (U) bis zum zweiten Abschnitt (B) hin zunimmt.

2. Rotorblattschale (110a, 110b) nach Anspruch 1, wobei im Wesentlichen alle Fasern der wenigstens einen Faserlage (11a, 11b, 15a, 15b, 20, 50) in Längsrichtung (L) ausgerichtet sind und/oder die wenigstens eine Faserlage (11a, 11b, 15a, 15b, 20, 50) als unidirektionale Schicht ausgebildet ist.

3. Rotorblattschale (110a, 110b) nach einem der Ansprüche 1 oder 2, wobei die Anzahl der Faserlagen (20, 50) im Übergangsbereich (U) in dem Maße zunimmt, in dem die Stärke des Rotorblattgurts (12) abnimmt.

4. Rotorblattschale (110a, 110b) nach einem der vorangehenden Ansprüche, wobei die Kernschicht ein Kernmaterial (4a, 4b, 3a, 3b, 14a, 14b, 30) aufweist, welches den Rotorblattgurt (2a, 2b, 12) im ersten Abschnitt (A) umgibt.

5. Rotorblattschale (110a, 110b) nach einem der vorangehenden Ansprüche, wobei das Schichtsystem wenigstens eine Deckschicht (10) aufweist, die auf einer der Kernschicht abgewandten Seite wenigstens eines der Laminate (1a, 2b, 5a, 5b, 21, 51) angeordnet ist und eine Außenseite oder eine Innenseite der Rotorblattschale (110a, 110b) bildet.

6. Rotorblattschale (110a, 110b) nach einem der vorangehenden Ansprüche, wobei die Schalenvorderkante (9) und die Schalenhinterkante (8) entlang der Längsrichtung (L) eine Krümmung aufweisen, so dass sich ein in Richtung der Hinterkante (9) gekrümmter Rotorblattkamm (400), welcher durch den Verlauf der maximalen Bauhöhe des Querschnitts der Rotorblattschale (110a, 110b) entlang der Längsrichtung (L) definiert wird, ergibt.

7. Rotorblattschale (110a, 110b) nach Anspruch 6, wobei die Lage des der Schalenspitze zugewandten Endes (a) des ersten Abschnitts (A) durch einen vorgegebenen Abstand zwischen dem Rotorblattgurt (2a, 2b, 12) und der gekrümmten Vorderkante (9) festgelegt ist.

8. Rotorblatt (100) für eine Windenergieanlage, wobei das Rotorblatt (100) wenigstens eine Rotorblattschale (110a, 110b) nach einem der vorangehenden Ansprüche aufweist.

9. Windenergieanlage mit mindestens einem Rotorblatt (100) nach Anspruch 8.

## Claims

1. A rotor blade shell (110a, 110b) for a rotor blade (100) of a wind energy installation, wherein the rotor blade shell (110a, 110b) extends, in a longitudinal direction (L), from a root of the shell (400) to a tip of the shell (401) and, in a transverse direction (Q), from a trailing edge of the shell (8) to a leading edge of the shell (9), and wherein the rotor blade shell (110a, 110b) comprises a layer system which extends in the longitudinal direction (L), which layer system comprises at least one core layer and two laminates (1a, 2b, 5a, 5b, 21, 51) which are arranged on sides of the core layer which are opposite to one another, wherein
- a part of the core layer in a first portion (A) of the rotor blade shell (110a, 110b) is formed by a rotor blade spar cap (2a, 2b, 12) which extends in the longitudinal direction (L) and which terminates at an end (a) of the first portion (A) which faces towards the tip of the shell, and
- at least one of the two laminates (1a, 2b, 5a, 5b, 21, 51) in a second portion (B) of the rotor blade shell (110a, 110b), which second portion (B) of the rotor blade shell (110a, 110b) is joined onto the first portion (A) at the end (a) of the first portion (A) which faces towards the tip of the shell and which second portion (B) extends substantially to the tip of the shell, comprises at least one fibre layer (11a, 11b, 15a, 15b, 20, 50) which extends in the transverse direction (Q) from the trailing edge of the shell (8) to the leading edge of the shell (9),
**characterised in that**
the at least one fibre layer (11a, 11b, 15a, 15b, 20, 50) contains fibres, a predominant part of which, preferably more than 60%, in particular more than 80%, extends in the longitudinal direction (L), **in that** the first portion (A) comprises a transition region (U) at the end (a) which faces towards the tip of the shell, in which transition region (U) the rotor blade spar cap (2a, 2b, 12) becomes narrower, and **in that** fibre layers (11a, 11b, 15a, 15b, 20, 50) extend from the second portion (B) at least partially into the transition region (U), wherein the number of fibre layers (11a, 11b, 15a, 15b, 20, 50) with fibres, a predominant part of which extends in the longitudinal direction (L), increases from the transition region (U) to the second portion (B).

2. The rotor blade shell (110a, 110b) according to claim 1, wherein substantially all fibres of the at least one fibre layer (11a, 11b, 15a, 15b, 20, 50) are oriented in the longitudinal direction (L) and / or the at least one fibre layer (11a, 11b, 15a, 15b, 20, 50) is formed as a unidirectional layer.

3. The rotor blade shell (110a, 110b) according to any one of the claims 1 or 2, wherein the number of the fibre layers (20, 50) in the transition region (U) increases to the degree that the thickness of the rotor blade spar cap (12) decreases.

4. The rotor blade shell (110a, 110b) according to any one of the preceding claims,
wherein the core layer comprises a core material (4a, 4b, 3a, 3b, 14a, 14b, 30) which surrounds the rotor blade spar cap (2a, 2b, 12) in the first portion (A).

5. The rotor blade shell (110a, 110b) according to any one of the preceding claims,
wherein the layer system comprises at least one cover layer (10) which is arranged on a side of at least one of the laminates (1a, 2b, 5a, 5b, 21, 51) which faces away from the core layer, and which at least one cover layer (10) forms an outer side or an inner side of the rotor blade shell (110a, 110b).

6. The rotor blade shell (110a, 110b) according to any one of the preceding claims,
wherein the leading edge of the shell (9) and the trailing edge of the shell (8) have a curvature along the longitudinal direction (L), so that this results in a comb (400) of the rotor blade, which comb (400) of the rotor blade is curved in the direction of the trailing edge (9) and which comb (400) of the rotor blade is defined by the way in which the maximum structural height of the cross section of the rotor blade shell (110a, 110b) develops along the longitudinal direction (L).

7. The rotor blade shell (110a, 110b) according to claim 6, wherein the position of the end (a) of the first portion (A) which faces towards the tip of the shell is defined by a predetermined distance between the rotor blade spar cap (2a, 2b, 12) and the curved leading edge (9).

8. A rotor blade (100) for a wind energy installation, wherein the rotor blade (100) comprises at least one rotor blade shell (110a, 110b) according to any one of the preceding claims.

9. A wind energy installation comprising at least one rotor blade (100) according to claim 8.

## Revendications

1. Coque de pale de rotor (110a, 110b) pour une pale de rotor (100) d'une éolienne, dans laquelle la coque de pale de rotor (110a, 110b) s'étend à partir d'un pied de coque (400) dans une direction longitudinale (L) vers un bout de coque (401) et à partir d'un bord arrière de coque (8) dans une direction transversale (Q) vers un bord avant de coque (9) et présente un système de couches s'étendant dans la direction longitudinale (L), lequel contient au moins une couche centrale et deux stratifiés (1a, 2b, 5a, 5b, 21, 51), lesquels sont disposés sur les faces opposées l'une à l'autre de la couche centrale, dans laquelle
- une partie de la couche centrale est formée dans une première section (A) de la coque de pale de rotor (110a, 110b) par une courroie de pale de rotor (2a, 2b, 12) s'étendant dans la direction longitudinale (L), qui termine sur une extrémité (a) de la première section (A) tournée vers le bout de coque, et
- au moins un des deux stratifiés (1a, 2b, 5a, 5b, 21, 51) présente dans une seconde section (B) de la coque de pale de rotor (110a, 110b), qui se raccorde sur l'extrémité (a) de la première section (A) tournée vers le bout de coque à la première section (A) et s'étend sensiblement jusqu'au bout de coque, au moins une strate de fibres (11a, 11b, 15a, 15b, 20, 50), qui s'étend dans la direction transversale (Q) à partir du bord arrière de coque (8) vers le bord avant de coque (9),
**caractérisée en ce que**
la au moins une strate de fibres (11a, 11b, 15a, 15b, 20, 50) contient des fibres, dont une majeure partie, de préférence plus de 60 %, en particulier plus de 80 %, s'étend dans la direction longitudinale (L), la première section (A) présente sur l'extrémité (a) tournée vers le bout de coque une zone de transition (U), dans laquelle la courroie de pale de rotor (2a, 2b, 12) s'amincit, et les strates de fibres (11a, 11b, 15a, 15b, 20, 50) s'étendent à partir de la seconde section (B) au moins en partie jusque dans la zone de transition (U), dans laquelle le nombre de strates de fibres (11a, 11b, 15a, 15b, 20, 50) avec des fibres, dont une majeure partie s'étend dans la direction longitudinale (L), augmente à partir de la zone de transition (U) jusqu'à la seconde section (B).

2. Coque de pale de rotor (110a, 110b) selon la revendication 1, dans laquelle sensiblement toutes les fibres de la au moins une strate de fibres (11a, 11b, 15a, 15b, 20, 50) sont orientées dans la direction longitudinale (L) et/ou la au moins une strate de fibres (11a, 11b, 15a, 15b, 20, 50) est réalisée en tant que couche unidirectionnelle.

3. Coque de pale de rotor (110a, 110b) selon l'une quelconque des revendications 1 ou 2, dans laquelle le nombre des strates de fibres (20, 50) dans la zone de transition (U) augmente à mesure que l'épaisseur de la courroie de pale de rotor (12) diminue.

4. Coque de pale de rotor (110a, 110b) selon l'une quelconque des revendications précédentes, dans laquelle la couche centrale présente un matériau central (4a, 4b, 3a, 3b, 14a, 14b, 30), lequel entoure la courroie de pale de rotor (2a, 2b, 12) dans la première section (A).

5. Coque de pale de rotor (110a, 110b) selon l'une quelconque des revendications précédentes, dans laquelle le système de couches présente au moins une couche de recouvrement (10), qui est disposée sur une face d'au moins un des stratifiés (1a, 2b, 5a, 5b, 21, 51) opposée à la couche centrale et forme une face extérieure ou une face intérieure de la coque de pale de rotor (110a, 110b).

6. Coque de pale de rotor (110a, 110b) selon l'une quelconque des revendications précédentes, dans laquelle le bord avant de coque (9) et le bord arrière de coque (8) présentent le long de la direction longitudinale (L) une courbure, de sorte qu'un peigne de pale de rotor (400) courbé en direction du bord arrière (9), lequel est défini par le tracé de la hauteur de construction maximale de la section transversale de la coque de pale de rotor (110a, 110b) le long de la direction longitudinale (L), est produit.

7. Coque de pale de rotor (110a, 110b) selon la revendication 6, dans laquelle la position de l'extrémité (a) de la première section (A) tournée vers le bout de coque est fixée par une distance prédéfinie entre la courroie de pale de rotor (2a, 2b, 12) et le bord avant (9) courbé.

8. Pale de rotor (100) pour une éolienne, dans laquelle la pale de rotor (100) présente au moins une coque de pale de rotor (110a, 110b) selon l'une quelconque des revendications précédentes.

9. Eolienne avec au moins une pale de rotor (100) selon la revendication 8.
